(19) **Europäisches Patentamt / European Patent Office / Office européen des brevets**

(11) **EP 2 046 046 A1**

(12) **EUROPEAN PATENT APPLICATION**

(43) Date of publication:
**08.04.2009 Bulletin 2009/15**

(51) Int Cl.:
**H04N 7/26** (2006.01)

(21) Application number: **07301424.3**

(22) Date of filing: **02.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Chen, Qu Qing**
**100085 Beijing (CN)**

• **Chen, Zhi Bo**
**100085 Beijing (CN)**
• **Gu, Xiao Dong**
**100085 Beijing (CN)**

(74) Representative: **Le Dantec, Claude**
**Thomson,**
**46, Quai Alphonse Le Gallo**
**92100 Boulogne-Billancourt (FR)**

(54) **Methods of encoding and reconstructing image data and devices implementing said methods**

(57) The invention relates to a method for coding a block of N image data with N a positive integer comprising the step of :
- transforming (S2) the block of N image data into a block of N transformed data;
- quantizing (S4) the block of N transformed data into a block of N quantized data;
- sampling (S6) the block of N quantized data into q sets of M sampled data according to q predefined non-overlapping sampling patterns with M and q integers and M*q=N; and
- coding (S8) each set of M sampled data and, for each set, a data representative of the corresponding predefined sampling pattern into a stream of binary data.

FIGURE 2

**Description**

1. Field of the invention

The invention belongs to video/image coding domain. Specifically, the present invention relates to a coding method and a coding device. It also relates to a method for reconstructing image data and a decoder implementing the reconstructing method.

2. Background of the invention

Multiple description coding (MDC) has been studied as an effective solution to deliver video sequence over error prone network. A typical multiple description (MD) encoder generates more than one descriptions of a video sequence, and each description is individually packetized and sent through either the same or separate physical channels. The decoder can reconstruct the signal in an acceptable quality without receiving all the descriptions. Normally, the more descriptions are received, the better quality can be provided.

A first MDC encoding method consists in directly decomposing the original image/video sequence into two or more sub-image/sub-videos either in the spatial, temporal, or frequency domain. Each subset is then compressed separately and corresponds to a specific description.

A second MDC method generates different description by exploiting its quantization process. The output of a quantizer is assigned two indexes, one for each description. The decoder estimates the reconstructed signal based on the received index(es).

A third MDC method uses a correlated transform, which introduces a controlled amount of redundancy between two sets of coefficients. For example, in the document entitled "Multiple description source coding using pairwise correlating transforms" and published in October 2001 in IEEE Trans. On Image Processing, Wang et al. propose a pairwise correlating transform method which transforms a pair of random variables using a non-orthogonal linear transform. Each of the two outputs lie in one of two nonorthogonal subspaces.

The fourth MDC method applies unequal cross-packet forward error correction (FEC) to different parts of a scalable bitstream, instead of designing the source encoder to yield multiple descriptions directly. This method is commonly known as MD-FEC.

3. Summary of the invention

The invention concerns an encoding method that is an alternative to the above methods providing similar effects.

More particularly, the invention concerns a method for coding a block of N image data with N a positive integer comprising the step of :

- transforming the block of N image data into a block of N transformed data;
- quantizing the block of N transformed data into a block of N quantized data;
- sampling the block of N quantized data into q sets of M sampled data according to q predefined non-overlapping sampling patterns with M and q integers and M*q=N; and
- coding each set of M sampled data and, for each set, a data representative of the corresponding predefined sampling pattern into a stream of binary data. This method thus makes it possible to generate several description of a video sequence by direct sampling of transformed data. Advantageously, it does not increase the complexity of the encoder with respect to the traditional hybrid video coding framework.

According to a specific embodiment, the sampling step and the quantizing step are interchanged.

According to advantageous embodiment, the transforming step is preceded by a step of computing a mean value of the N image data and a step of subtracting the mean value from each of the N image data. According to this embodiment, the transforming step applies on the N image data after the subtracting step and the mean value is encoded within each stream during the coding step.

The invention further relates to a method of reconstructing a block of N image data arising in the form of p streams of binary data comprising the steps of:

- decoding each stream of binary data into one set of M decoded data and one data representative of a predefined sampling pattern corresponding to the set;
- dequantizing the M decoded data of each set into M dequantized data;
- determining the block of N image data so that the sum of absolute values of the N image data is mimimum and so that each set of M sampled data obtain from the block of N image data processed according to the following steps is equal to the corresponding set of M dequantized data:

- transforming the block of N image data into a block of N transformed data; and
- sampling the block of N transformed data into p sets of M sampled data according to the p sampling patterns.

According to another embodiment, the method of reconstructing a block of N image data arising in the form of p streams of binary data comprising the steps of:

- decoding each stream of binary data into one set of M decoded data and one data representative of a predefined sampling pattern corresponding to the set;
- dequantizing the M decoded data of each set into M dequantized data;
- determining the block of N image data so that the sum of absolute values of the N image data is mimimum and so that the $l_2$ norm of the difference between the sampled data obtain from the block of N image data processed according to the following steps and the corresponding P dequantized data, with P=M*p, is below a predefined threshold ε:
- transforming the block of N image data into a block of N transformed data; and
- sampling the block of N transformed data into p sets of M sampled data according to the p sampling patterns.

According to another embodiment, the method of reconstructing a block of N image data arising in the form of p streams of binary data comprising the steps of:

- decoding each stream of binary data into one set of M decoded data and one data representative of a predefined sampling pattern corresponding to the set;
- dequantizing the M decoded data of each set into M dequantized data;
- determining the block of N image data so that the $l_1$ norm of the gradient of the N image data is mimimum and so that each set of M sampled data obtain from the block of N image data processed according to the following steps is equal to the corresponding set of M dequantized data:
- transforming the block of N image data into a block of N transformed data; and
- sampling the block of N transformed data into p sets of M sampled data according to the p sampling patterns.

According to another embodiment, the method of N image data arising in the form of p streams of binary data comprising the steps of:

- decoding each stream of binary data into one set of M decoded data and one data representative of a predefined sampling pattern corresponding to the set;
- dequantizing the M decoded data of each set into M dequantized data;
- determining the block of N image data so that the $l_1$ norm of the gradient of the N image data is mimimum and so that the $l_2$ norm of the difference between the sampled data obtain from the block of N image data processed according to the following steps and the corresponding P dequantized data, with P=M*p, is below a predefined threshold ε:
- transforming the block of N image data into a block of N transformed data; and
- sampling the block of N transformed data into p sets of M sampled data according to the p sampling patterns.

The invention further relates to an encoder comprising:

- means for receiving a block of N image data with N a positive integer;
- means for transforming the block of N image data into a block of N transformed data;
- means for quantizing the block of N transformed data into a block of N quantized data;
- means for sampling the block of N quantized data into q sets of M sampled data according to q predefined non-overlapping sampling patterns with M and q integers and M*q=N; and
- means for encoding each set of M sampled data and, for each set, a data representative of the corresponding predefined sampling pattern into a stream of binary data.
- means for transmitting the binary data.

The invention further relates to a decoder comprising:

- means for receiving p streams of binary data;
- means for decoding each stream of binary data into one set of M decoded data and one data representative of a predefined sampling pattern corresponding to the set;

- means for dequantizing the M decoded data of each set into M dequantized data;
- means for determining the block of N image data so that the sum of absolute values of the N image data is minimized and so that each set of M sampled data obtain from the block of N image data processed according to the following steps is equal to the corresponding set of M dequantized data:
- transforming the block of N image data into a block of N transformed data; and
- sampling the block of N transformed data into p sets of M sampled data according to the p sampling patterns.
- means for transmitting the block of N image data.

The invention further relates to a binary stream representative of an image or a coded video sequence made of blocks of pixels encoded according to the method of the invention comprising at least one binary data indicating for a block, a group of blocks, an image or a group of images the sampling pattern used to encode the block, the group of blocks, the image or the group of images respectively.

4. Brief description of the drawings

Other features and advantages of the invention will appear with the following description of some of its embodiments, this description being made in connection with the drawings in which:

- Figure 1 represents an exemplary architecture of a video encoder capable of encoding data in a way compliant with the invention;
- Figures 2 represents a flowchart of an encoding method according to a first embodiment of the invention;
- Figure 3 represents an exemplary architecture of a video decoder according to a specific embodiment of the invention;
- Figure 4 represents a flowchart of a decoding method according to a specific embodiment of the invention;
- Figure 5 represents a flowchart of an encoding method according to a second embodiment of the invention; and
- Figure 6 represents a flowchart of a decoding method according to another embodiment of the invention.

5. Detailed description of preferred embodiments

In the past few years, a totally different signal recovery theory was discovered named compressed sensing theory, stating that a *sparsely* distributed signal can be almost completely recovered even if most of its linearly transformed coefficients are lost. This means that the reconstructed signals can almost be perfect even if some of the coefficients in the transformed domain are quantized to zero. Compared with the old signal recovery theory, the compressed sensing theory can bring a significant breakthrough in the application of image/video coding.

In the following paragraphs the general framework of compressed sensing theory is reviewed. The Shannon/Nyquist sampling theorem specifies that to avoid losing information when capturing a signal, one must sample at least two times faster than the signal bandwidth. However, the compressed sensing method, which is also named as compressive sampling, can capture and represent compressible signals at a rate significantly below the Nyquist rate. It employs non-adaptive linear projections that preserve the structure of the signal. The signal is then reconstructed from these projections using an optimization process.

For a real-valued, finite-length, one-dimensional, discrete-time signal $x$, it can be expressed as:

$$x = \sum_{i=1}^{N} s_i \psi_i \quad \text{or} \quad x = \psi s \qquad (1)$$

Here $x$ and $s$ are $N \times 1$ column vectors, and $\psi = [\psi_1 | \psi_1 | \cdots | \psi_N]$ is a $N \times N$ basis matrix, with the vectors $\{\psi_i\}$ as columns and N as a positive integer. Clearly, $x$ and $s$ are equivalent representations of the signal, with $x$ in the time or space domain and $s$ in the $\psi$ domain. The signal $x$ is $K$-sparse, if it is a linear combination of only $K$ basis vectors, i.e. only $K$ of the $s_i$ coefficients in equation (1) are nonzero and ($N$-$K$) are zero. The signal $x$ is compressible if the representation (1) has just a few large coefficients and many small coefficients; i.e. if $K << N$.

For traditional transform coding, $\psi$ is the transform, and $s$ is in the frequency domain. The $K$ largest coefficients are kept while the ($N$-$K$) smallest coefficients are discarded.

In the compressed sensing theory, let us consider a general linear measurement process that computes $M < N$ inner products between $x$ and a collection of vectors $\left\{ \phi_j \right\}_{j=1}^{M}$ as *in* $y_j = < x, \phi_j >$, with M a positive integer. The

measurements $y_j$ are arranged in an $M \times 1$ vector $y$ and the measurement vectors $\phi_j^T$ as rows in a $M \times N$ matrix $\Phi$. Then, by substituting $\psi$ from (1), $y$ can be written as:

$$y = \Phi x = \Phi \psi \, s = \Theta s \qquad (2)$$

Here $\Theta = \Phi \psi$ is a $M \times N$ matrix.

The signal reconstruction algorithm takes the $M$ measurements of the vector $y$, the random measurement matrix $\Phi$ (or the random seed that generated), and the basis $\psi$ in order to reconstruct the length-$N$ signal x or, equivalently, its sparse vector $s$.

Since $M < N$, this problem appears to be ill-conditioned. However, the additional assumption of signal sparsity makes it possible and practical to reconstruct the signal $x$. According to the compressed sensing theory, when taking $M \geq c.K.\log N$ random measurements (c is a constant that affects the probability of recovery), the signal s which satisfies $\Theta s = y$ can be exactly recovered under the minimum $l_1$ norm reconstruction with high probability by solving the following constrained optimization problem:

$$\hat{s} = \arg\min \|s\|_1 \text{ such that } \Theta s = y \qquad (3)$$

For real valued signal $s$, the $l_1$ norm is the sum of absolute value of its non-zero coefficients, i.e. $\|s\|_1 = \Sigma |s_i|$.

If some error is permitted, then the following constrained optimization problem has to be solved instead of those of equation (3):

$$\hat{s} = \arg\min \|s\|_1 \text{ such that } \|\Theta s - y\|_2 \leq \varepsilon \qquad (4)$$

If the signal is a 2D image of size nxn, then the sparsed signal s can also be the gradient. In this case, the following constrained optimization problem has to be solved instead of those of equation (3):

$$\hat{s} = \arg\min \|G\|_1 = \arg\min \sum_{i,j} \|D_{ij}s\|_2 \text{ such that } \Theta s = y \qquad (5)$$

where : - G is the gradient; and

$$\text{-} \quad D_{ij}s = \begin{pmatrix} D_{h,ij}s \\ D_{v,ij}s \end{pmatrix}, \quad D_{h,ij}s = \begin{cases} s_{i+1,j} - s_{i,j} & i < n \\ 0 & i = n \end{cases}$$

and

$$D_{v,ij}s = \begin{cases} s_{i,j+1} - s_{i,j} & j < n \\ 0 & j = n \end{cases}$$

If the signal is a 2D image, if the sparsed signal s is the gradient and if some error is permitted, then the following constrained optimization problem has to be solved instead of those of equation (3):

$$\hat{s} = \arg\min \sum_{i,j} \left\| D_{ij} s \right\|_2 \quad \text{such that} \quad \left\| \Theta s - y \right\|_2 \leq \varepsilon \qquad (6)$$

This is a convex optimization problem that can be conveniently reduced to a linear program known as basis pursuit. Such an algorithm is described in the document from E. Candes, J. Romberg, and T. Tao, entitled "Robust uncertainty principles: Exact signal reconstruction from highly incomplete frequency information," and published in IEEE Trans. on Information Theory, vol.52, no.2, Feb. 2006.

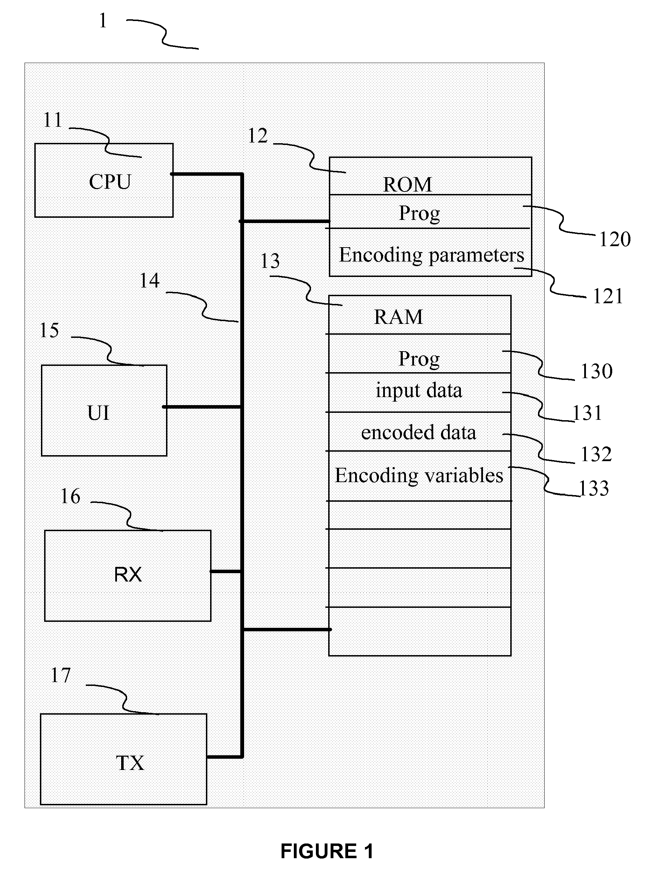

**Figure 1** represents an exemplary architecture of an encoder 1 according to the invention. Encoder 1 comprises the following elements that are linked together by a data and address bus 14:

- a microprocessor 11 (or CPU), which is, for example, a DSP (or Digital Signal Processor);
- a ROM (or Read Only Memory) 12;
- a RAM (or Random Access Memory) 13;
- a user interface 15;
- a module 16 for reception of video data to encode, the video data coming from an application or a hard disk;
- a transmission module 17 for transmission of encoded data on a channel for example to a decoder.

Each of these elements of figure 1 are well known by those skilled in the art and won't be disclosed further.

In each of mentioned memory, the word « register » used in the specification can correspond to area of small capacity (some bits) or to very large area (e.g. a whole program or large amount of received or decoded data).

ROM 12 comprises:

- a program "prog" 120; and
- encoding parameters 121 (such as quantization step, DCT transform, VLC tables etc); and

Algorithm of the encoding method according to the invention are stored in the ROM 12. When switched on, the CPU 11 uploads the program 120 in the RAM and executes the corresponding instructions.

RAM 13 comprises:

- in a register 130, the program executed by the CPU 11 and uploaded after switch on of the encoder 1;
- input data in a register 131;
- encoded data in different state of the encoding method in a register 132; and
- other variables used for encoding in a register 133.

According to a variant of the invention, the digital part of the encoder 1 is implemented in pure hardware configuration (e.g. in one or several FPGA, ASIC or VLSI with corresponding memory) or in a configuration using both VLSI and DSP.

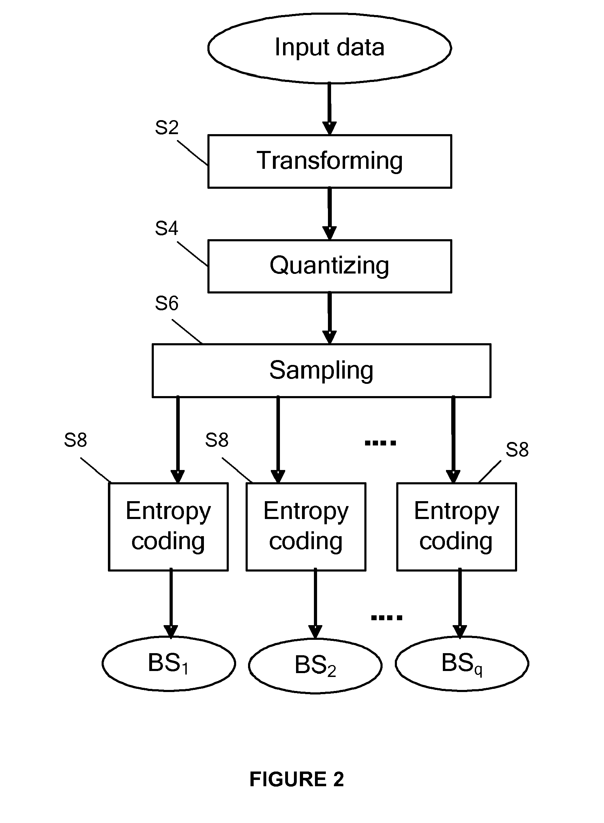

**Figure 2** discloses an encoding method according to a first embodiment of the invention. In figure 2, the represented boxes are purely functional entities, which do not necessarily correspond to physical separated entities. Namely, they could be developed in the form of software, or be implemented in one or several integrated circuits. The method may be embodied in a computer readable medium and executable by a computer. Therefore, according to the invention, $s$ is the $K$-sparse data in the spatial domain or the data after temporal or spatial prediction. $\psi$ is the normal DCT transform, and $\Phi$ is the additional sampling in the frequency domain. According to a preferred embodiment, the image is divided into non overlapping blocks of n by n pixels, with $n^2 = N$. The following steps apply successively to encode a given block of an image and are repeated in order to encode a whole image or a whole video sequence.

At step S2, the input data are transformed in transformed data using for example the DCT transform or the integer transform in the H.264/AVC. According to a specific embodiment, the image is divided into non overlapping blocks of pixels. The input data can be the pixels' values (luminance, chrominance) of a block of image in the spatial domain, or the pixel values of the block after prediction. Such a prediction may occurs in the spatial domain and is named intra prediction or in the temporal domain and is called inter prediction.

At step S4, the transformed data are quantized using same or similar quantization method as the existing quantization method of H.264/AVC, H.263, or MPEG-2 (see for example section 7.4 of document ISO/IEC 13818-2:2000). At step S6, the quantized data are sampled into q sets of M quantized data with q and M positive integers. Each set forms a description of the input data. According to one embodiment predefined non overlapping sampling patterns are used. These sampling patterns are predefined such that the sampling step is random or pseudo-random. For example, if two sampling patterns are used, they may be defined as follows:

- sampling pattern n°1: 1 4 6 7 11 12 14 15
- sampling pattern n°2: 2 3 5 8 9 10 13 16

In sampling patterns n°1 and n°2, the numbers represent the positions of the pixels within an 4x4 block, wherein the pixels are numbered column by column as follows:

| | | | |
|---|---|---|---|
| 1 | 5 | 9 | 13 |
| 2 | 6 | 10 | 14 |
| 3 | 7 | 11 | 15 |
| 4 | 8 | 12 | 16 |

Others patterns may be defined.

According to the compressed sensing theory when the random measurements number M is much larger than the sparsity K, more precisely when $M \geq cK.\log N$, then the original data can be reconstructed perfectly by a minimum $l_1$ norm reconstruction method with a high probability. However, the invention is not limited to the condition above condition that $M \geq c.K.\log N$. Indeed, even when the condition is not fulfilled, the encoding method has a better performance than a traditional DCT based encoding method. According to the invention, if the block size is 16x16, then if the image data are separated into two sets randomly, i.e. q=2, then each set has a measurement number M=128, i.e. contains 128 quantized data. More generally, if the block size is 16x16, then if the image data are separated into q sets randomly, then each set has a measurement number M=256/q. More generally, M is equal to N/q. It should be noted that the sampling step can be put before the quantization, or after the quantization, although in this embodiment only the case sampling after quantization.

At steps S8, each set of data is encoded separately in a stream of binary data (denoted BS$_1$, BS$_2$, ..., BSq respectively) using any of existing or future entropy coding methods to further remove the redundancy in the statistic domain. The encoding method of MPEG2 may be used (see for example section 7.2 of document ISO/IEC 13818-2: 2000). Each stream may then be transmitted over a channel to a corresponding decoder implementing the decoding method according to the invention. All streams are sent either on the same physical channel or on separate channel. At least one bit is inserted in each stream to identify the corresponding sampling pattern used at step S6, the sampling pattern itself is supposed to be known at the decoding side. In the case where q=2, a single bit is necessary to identify the sampling pattern, if q=8, then at least 3 bits are necessary to identify the sampling pattern.

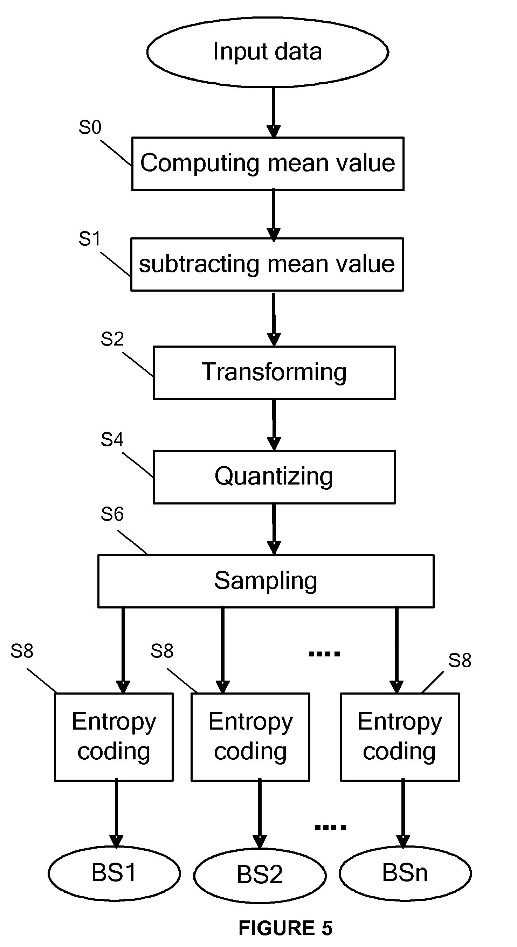

**Figure 5** discloses an encoding method according to a second embodiment of the invention. The steps identical to those depicted on figure 2 are identified with the same numerical references and are not described further. According to this embodiment, step S2 is preceded by a step S0 of computing the mean value of the input data and a step S1 of subtracting the computed mean value from each of the input data. These steps make it possible to increase the number of zero valued image data within the block to be encoded. In this case, the mean value computed at step S0 is encoded in binary data and is transmitted within each of the q streams generated at steps S8.

An example of the encoding of a block according to the second embodiment is described below for the following input block B:

| | | | |
|---|---|---|---|
| 128 | 128 | 160 | 96 |
| 128 | 128 | 128 | 128 |
| 128 | 128 | 128 | 128 |
| 128 | 128 | 128 | 128 |

At step S0, the mean value is computed and is equal to 128.
At step S1, 128 is subtracting from each image data of block B. After step S1, block B is defined as follows:

| | | | |
|---|---|---|---|
| 0 | 0 | 32 | - 32 |
| 0 | 0 | 0 | 0 |
| 0 | 0 | 0 | 0 |
| 0 | 0 | 0 | 0 |

After step S2 block B isdefined as follows:

| | | | |
|---|---|---|---|
| 0 | 20.905 | 0 | 8.6591 |

(continued)

| 7.6367 | -16.1598 | 2.5136 | -20.8043 |
|---|---|---|---|
| -13.3035 | -3.1214 | -15.6926 | 8.8891 |
| - 2.0490 | 8.2863 | 13.2620 | 4.0819 |

After step S4, if the above block is quantized with a quantization step that is equal to 2, then it becomes:

| 0 | 10 | 0 | 4 |
|---|---|---|---|
| 4 | -8 | 1 | -10 |
| -7 | -2 | -8 | 4 |
| -1 | 4 | 7 | 2 |

If q= 2 and if the following two predefined sampling patterns are used:

| 0 | / | / | / | | / | 10 | 0 | 4 |
|---|---|---|---|---|---|---|---|---|
| / | -8 | / | -10 | | 4 | / | 1 | / |
| / | -2 | -8 | 4 | | -7 | / | / | / |
| -1 | / | 7 | / | | / | 4 | / | 2 |

where the sign "/" means that the corresponding quantized data is not sampled, then two sets of 8 quantized data are generated at step S6. These sets are the following:

Set n°1: 0; -1; -8; -2; -8; 7; -10; 4;
Set n°2: 4;-7;10;4;0;1;4;2.

Each of the two sets is encoded at step S8 in one stream, BS1 and BS2 respectively. In each stream, the mean value 128 and a bit making it possible to identify the corresponding sampling pattern are also encoded.

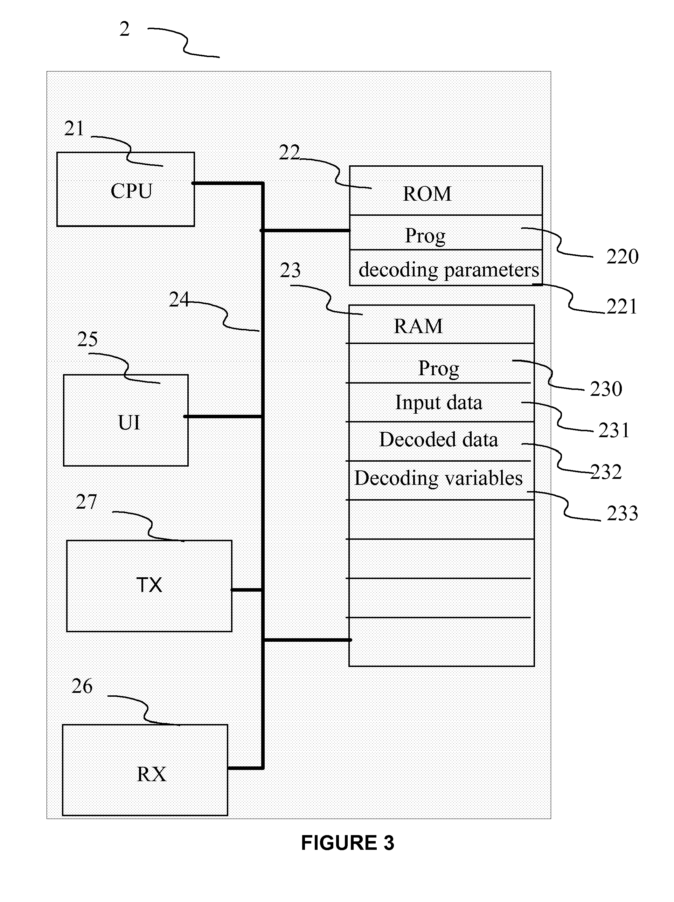

**Figure 3** represents an exemplary architecture of a decoder 2 according to the invention. The decoder 2 can be any decoder adapted to reconstruct data that are coded by the encoder 1. Advantageously, the decoder is adapted to take into account the specificities of the encoder 1 and especially the sampling step.

Decoder 2 comprises the following elements that are linked together by a data and address bus 24:

- a microprocessor 21 (or CPU), which is, for example, a DSP (or Digital Signal Processor);
- a ROM (or Read Only Memory) 22;
- a RAM (or Random Access Memory) 23;
- a user interface 25;
- a reception module 26 for reception of encoded data;
- possibly a module 26 for transmission of decoded data to an application and/or a display.

Each of these elements of figure 2 are well known by those skilled in the art and won't be disclosed further.

ROM 22 comprises:

- a program "prog" 220; and
- decoding parameters 221 (such as quantizing step, VLC tables, sampling patterns etc).

Algorithm of the decoding method according to the invention are stored in the ROM 22. When switched on, the CPU 21 uploads the program 220 in the RAM and executes the corresponding instructions.

RAM 23 comprises:

- in a register 230, the program executed by the CPU 21 and uploaded after switch on of the decoder 2;
- input data in a register 231;
- decoded data in different state of the decoding method in a register 232; and
- other variables used for decoding in a register 233.

According to a variant of the invention, the digital part of the decoder 2 is implemented in pure hardware configuration (e.g. in one or several FPGA, ASIC or VLSI with corresponding memory) or in a configuration using both VLSI and DSP.

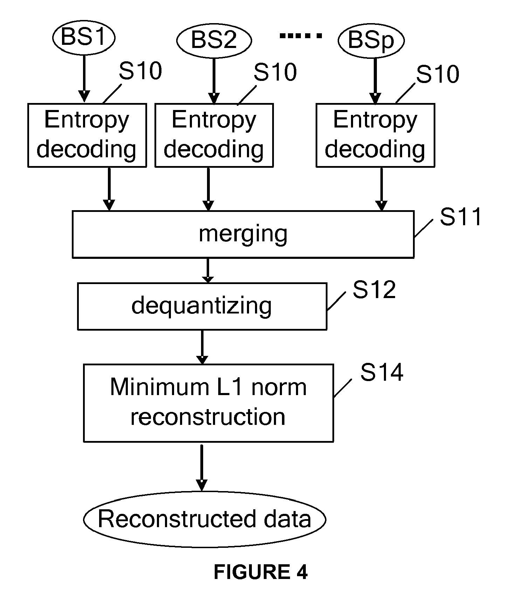

**Figure 4** discloses a decoding method according to a specific embodiment of the invention. In figure 4, the represented boxes are purely functional entities, which do not necessarily correspond to physical separated entities. Namely, they could be developed in the form of software, or be implemented in one or several integrated circuits. The method may be embodied in a computer readable medium and executable by a computer. The method takes as input p streams representing image data encoded according to one of the previous embodiments, where p is a positive integer that is inferior or equal to q. Indeed, it happens that some of the q streams generated by the encoder are lost totally or partially during their transmission. According to a preferred embodiment the following steps apply successively in order to reconstruct one block of n by n pixels in a given image, with $n^2$=N. The steps are repeated in order to reconstruct a whole image or a whole video sequence.

At steps S10, each of the p streams is decoded in M decoded data using the inverse process of step S8. Since $p \leq q$, then $M*p \leq N$. Each of the p sampling patterns used at step S6 by the encoding method to generate the p input streams are also determined on the basis of the at least one bit inserted, at step S8, by the encoder in each of the p streams.

At step S11, the p sets of M decoded data are possibly merged into a single block of n by n pixels taking into account the predefined sampling patterns determined at step S10. If p<q, then some of the decoded data in the block are missing. Such a merging is not explicitly required.

At step S12, the P decoded data are dequantized in dequantized data, with P=M*p. It applies the inverse process of step S4.

At step S14, N reconstructed data are obtained after the minimum $l_1$ norm reconstruction.
According to a first embodiment corresponding to equation (3), step 14 consists in determining N image data, so that the sum of absolute values of said N image data is minimum and so that the N data after being processed according to the following steps equal to the P dequantized data obtained at step S12:

- transforming said N image data into N transformed data according to step S2; and
- sampling said block N quantized data into p sets of M sampled data according to step S6 according to the sampling patterns determined at steps S10 for each of the p streams.

Said otherwise the N image data are the image data $\{s_{i,j}\}_{0<i\leq n,0<j\leq n}$ that minimize $\|s\|_1 = \Sigma |s_{i,j}|$ subject to $\Theta s = y$, where y represents the M*p dequantized data.
According to a second embodiment corresponding to equation (4), step 14 consists in determining N image data, with $N=n^2$, so that the sum of absolute values of said N image data is minimum and so that the $l_2$ norm of the difference between the N data after being processed according to the following steps and the P dequantized data is below a predefined threshold $\varepsilon$:

- transforming said N image data into N transformed data according to step S2 of the encoding method of figure 2; and
- sampling said block N quantized data into p sets of M sampled data according to step S6 according to the sampling patterns determined at steps S10 for each of the p streams.

Said otherwise the N image data are the image data $\{s_{i,j}\}_{0<i\leq n,0<j\leq n}$ that minimize $\|s\|_1 = \Sigma |s_{i,j}|$ under the constraint that $\|\Theta s - y\|_2 \leq \varepsilon$.
According to a third embodiment corresponding to equation (5), step 14 consists in determining N image data $\{s_{i,j}\}_{0<i\leq n,0<j\leq n}$, with $N=n^2$, that minimize $\Sigma \|D_{ij}s\|_2$ and so that the N data after being processed according to the following steps equal the P dequantized data:

- transforming said N image data into N transformed data according to step S2 of the encoding method of figure 2; and
- sampling said block N quantized data into p sets of M sampled data according to step S6 according to the sampling patterns determined at steps S10 for each of the p streams.

Said otherwise the N image data are the image data $\{s_{i,j}\}_{0<i\leq n,0<j\leq n}$ that minimize $\Sigma \|D_{ij}s\|_2$ under the constraint that $\Theta s = y$.
According to a fourth embodiment corresponding to equation (6), step 14 consists in determining N image data $\{s_{i,j}\}_{0<i\leq n,0<j\leq n}$, with $N=n^2$, that minimize $\Sigma \|D_{ij}s\|_2$ and so that the $l_2$ norm of the difference between the N data after being processed according to the following steps and the P dequantized data is below a predefined threshold $\varepsilon$:

- transforming said N image data into N transformed data according to step S2 of the encoding method of figure 2; and
- sampling said block N quantized data into p sets of M sampled data according to step S6 according to the sampling patterns determined at steps S10 for each of the p streams.

Said otherwise the N image data are the image data $\{s_{i,j}\}_{0<i\leq n,0<j\leq n}$ that minimize $\Sigma\|D_{ij}s\|_2$ under the constraint that $\|\Theta s - y\|_2 \leq \varepsilon$.

The minimum $I_1$ norm reconstruction can use the linear programming (LP) or the second-order cone programming (SOCP), according to different optimization models. The LPs are solved using a generic path-following primal-dual method, and the SOCPs are solved with a generic log-barrier algorithm. Such an algorithm is described in the document from E. Candes, J. Romberg, and T. Tao, entitled "Robust uncertainty principles: Exact signal reconstruction from highly incomplete frequency information," and published in IEEE Trans. on Information Theory, vol.52, no.2, Feb. 2006.

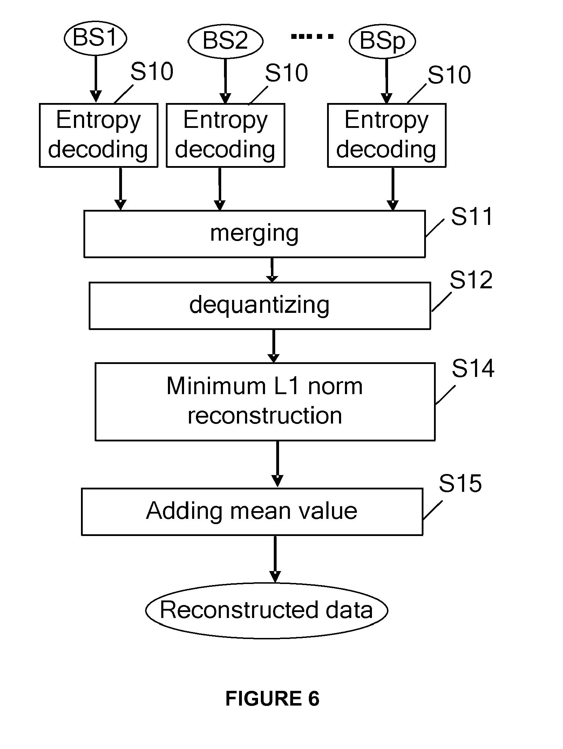

**Figure 6** discloses a decoding method according to another specific embodiment of the invention. The steps identical to those depicted on figure 4 are identified with the same numerical references and are not described further. According to this embodiment, at steps S10 one mean value is decoded from any of the p input streams. Indeed, at steps S8, the same mean value is encoded within each of the q streams. Therefore, at steps S10, it is only necessary to decode the mean value once from one of the p input streams. The step S14 is followed by a step S15 of adding the decoded mean value to each reconstructed image data.

An example of reconstruction of the input block B from the streams generated when encoding set n°1 and set n°2 with the encoding method of the invention (second embodiment).

Let's suppose that only the first stream BS$_1$ is received. The binary data are then entropy decoded at step S10 into the following 8 decoded data: 0; -1; -8; -2; -8; 7; -10; 4.

Since the predefined sampling patterns are supposed to be known at the decoder, and the sampling pattern used is determined at step S10, then the data obtained at step 10 may be placed in the correct position within the block which is therefore the following:

| 0 | / | / | / |
|----|-----|-----|------|
| / | -8 | / | -10 |
| / | -2 | -8 | 4 |
| -1 | / | 7 | / |

In this case each missing data is replaced by a zero value.

After step S12 of inverse quantization the block is the following:

| 0 | / | / | / |
|----|-----|-----|------|
| / | -16 | / | -20 |
| / | -4 | -16 | 8 |
| -2 | / | 14 | / |

After step S14, the reconstructed data are the following:

| 0 | -1 | 32 | -31 |
|----|-----|-----|------|
| 0 | 0 | 0 | 0 |
| 0 | -1 | -1 | 1 |
| 0 | 0 | 0 | 0 |

After adding the decoded mean value equal to 128 the block is the following:

| 128 | 127 | 160 | 97 |
|------|------|------|------|
| 128 | 128 | 128 | 128 |
| 128 | 127 | 127 | 129 |
| 128 | 128 | 128 | 128 |

Even with a single stream instead of two streams the block is precisely reconstructed even if not perfectly.

In the case, a traditional decoding method is applied with an inverse DCT step instead of the $I_1$ norm based reconstruction step S14, the reconstructed data are the following:

| 123 | 128 | 137 | 118 |
|------|------|------|------|
| 130 | 127 | 126 | 129 |

(continued)

| 130 | 126 | 127 | 130 |
| 131 | 123 | 134 | 129 |

This block is quite different from the original input block. Indeed in this case many important high frequencies are lost.

The invention is not limited to the embodiments described previously. In particular, according to another specific embodiment, the step S6 of the encoding method is preceded by a step for determining the sampling patterns used at step S6. In this case, each sampling pattern is encoded at step S8 and is transmitted within the stream representing the data sampled according to it. In this case, the sampling patterns need not to be known at the decoder side and the bit (s) identifying the sampling pattern need not to be transmitted. Such sampling patterns may be encoded using SEI messages (Supplemental Enhancement Information) as those defined in H.264.

The method of reconstruction is further adapted to reconstruct the sampling patterns encoded in each received stream. The reconstructed sampling patterns are then used to reconstruct the input data at the decoder side.

The invention further relates to a binary stream comprising binary data making it possible to identify the sampling pattern used to generate it. The binary data may be encoded for each block, for each group of blocks (i.e. slice), for each picture or for each group of pictures.

Advantageously, the binary stream further comprises binary data indicating the number of descriptions, i.e. the number q of streams, transmitted by the encoding method/encoder 1 according to the invention.

Such an encoding method is particularly suitable for real-time applications such as live video broadcasting and video conferencing, for which low delay is required and retransmission is often not acceptable. MDC is also helpful for peer-to-peer (P2P) video application since MDC enables that different descriptions can be sent from different peers without preference.

**Claims**

1. Method for coding a block of N image data with N a positive integer comprising the step of :

   - transforming (S2) said block of N image data into a block of N transformed data;
   the said method being **characterized in that** it further comprises the steps of:
   - quantizing (S4) said block of N transformed data into a block of N quantized data;
   - sampling (S6) said block of N quantized data into q sets of M sampled data according to q predefined non-overlapping sampling patterns with M and q integers and M*q=N; and
   - coding (S8) each set of M sampled data and, for each set, a data representative of the corresponding predefined sampling pattern into a stream of binary data.

2. Method according to claim 1, wherein the sampling step (S6) and the quantizing step (S4) are interchanged.

3. Method according to claim 1, wherein the transforming step (S2) is preceded by a step of computing (S0) a mean value of said N image data and a step of subtracting (S1) said mean value from each of said N image data and wherein said transforming step (S2) applies on said N image data after said subtracting step (S1) and wherein said mean value is encoded within each stream during said coding step (S8).

4. Method of reconstructing a block of N image data arising in the form of p streams of binary data comprising the steps of:

   - decoding (S10) each stream of binary data into one set of M decoded data and one data representative of a predefined sampling pattern corresponding to said set;
   - dequantizing (S12) said M decoded data of each set into M dequantized data;
   the said method being **characterized in that** it further comprises a step of determining the block of N image data so that the sum of absolute values of said N image data is mimimum and so that each set of M sampled data obtain from said block of N image data processed according to the following steps is equal to the corresponding set of M dequantized data:
   - transforming said block of N image data into a block of N transformed data; and
   - sampling said block of N transformed data into p sets of M sampled data according to said p sampling patterns.

5. Method of reconstructing a block of N image data arising in the form of p streams of binary data comprising the steps of:

- decoding (S10) each stream of binary data into one set of M decoded data and one data representative of a predefined sampling pattern corresponding to said set;
- dequantizing (S12) said M decoded data of each set into M dequantized data;

the said method being **characterized in that** it further comprises a step of determining the block of N image data so that the sum of absolute values of said N image data is mimimum and so that the $l_2$ norm of the difference between the sampled data obtain from said block of N image data processed according to the following steps and the corresponding P dequantized data, with P=M*p, is below a predefined threshold ε:

- transforming said block of N image data into a block of N transformed data; and
- sampling said block of N transformed data into p sets of M sampled data according to said p sampling patterns.

6. Method of reconstructing a block of N image data arising in the form of p streams of binary data comprising the steps of:

- decoding (S10) each stream of binary data into one set of M decoded data and one data representative of a predefined sampling pattern corresponding to said set;
- dequantizing (S12) said M decoded data of each set into M dequantized data;

the said method being **characterized in that** it further comprises a step of determining the block of N image data so that the $l_1$ norm of the gradient of said N image data is mimimum and so that each set of M sampled data obtain from said block of N image data processed according to the following steps is equal to the corresponding set of M dequantized data:

- transforming said block of N image data into a block of N transformed data; and
- sampling said block of N transformed data into p sets of M sampled data according to said p sampling patterns.

7. Method of reconstructing a block of N image data arising in the form of p streams of binary data comprising the steps of:

- decoding (S10) each stream of binary data into one set of M decoded data and one data representative of a predefined sampling pattern corresponding to said set;
- dequantizing (S12) said M decoded data of each set into M dequantized data;

the said method being **characterized in that** it further comprises a step of determining the block of N image data so that the $l_1$ norm of the gradient of said N image data is mimimum and so that the $l_2$ norm of the difference between the sampled data obtain from said block of N image data processed according to the following steps and the corresponding P dequantized data, with P=M*p, is below a predefined threshold ε:

- transforming said block of N image data into a block of N transformed data; and
- sampling said block of N transformed data into p sets of M sampled data according to said p sampling patterns.

8. Encoder (1) comprising:

- means (16) for receiving a block of N image data with N a positive integer;
- means (11, 12, 13, 14) for transforming said block of N image data into a block of N transformed data;

the said encoder (1) being **characterized in that** it further comprises:

- means (11, 12, 13, 14) for quantizing said block of N transformed data into a block of N quantized data;
- means (11, 12, 13, 14) for sampling said block of N quantized data into q sets of M sampled data according to q predefined non-overlapping sampling patterns with M and q integers and M*q=N; and
- means (11, 12, 13, 14) for encoding each set of M sampled data and, for each set, a data representative of the corresponding predefined sampling pattern into a stream of binary data.
- means (17) for transmitting said binary data.

9. Decoder (2) comprising:

- means (26) for receiving p streams of binary data;
- means for decoding (21,22, 23, 24) each stream of binary data into one set of M decoded data and one data representative of a predefined sampling pattern corresponding to said set;
- means for dequantizing (21,22, 23, 24) said M decoded data of each set into M dequantized data;

the said decoder (2) being **characterized in that** it further comprises:

- means for determining (21,22, 23, 24) said block of N image data so that the sum of absolute values of said N image data is minimized and so that each set of M sampled data obtain from said block of N image data processed according to the following steps is equal to the corresponding set of M dequantized data:

- transforming said block of N image data into a block of N transformed data; and

- sampling said block of N transformed data into p sets of M sampled data according to said p sampling patterns.

- means (27) for transmitting said block of N image data.

10. Binary stream representative of an image or a coded video sequence made of blocks of pixels encoded according to the method of claim 1, **characterized in that** it comprises, at least one binary data indicating for a block, a group of blocks, an image or a group of images the sampling pattern used to encode said block, said group of blocks, said image or said group of images respectively.

1

**FIGURE 1**

**FIGURE 2**

2

21

CPU

22

ROM

Prog — 220

decoding parameters — 221

23

24

25

RAM

Prog — 230

Input data — 231

UI

Decoded data — 232

Decoding variables — 233

27

TX

26

RX

**FIGURE 3**

**FIGURE 4**

Input data

S0 — Computing mean value

S1 — subtracting mean value

S2 — Transforming

S4 — Quantizing

S6 — Sampling

S8 — Entropy coding    S8 — Entropy coding    ....    Entropy coding — S8

BS1    BS2    ....    BSn

**FIGURE 5**

BS1  BS2  ..... BSp

S10  S10  S10

Entropy decoding | Entropy decoding | Entropy decoding

merging — S11

dequantizing — S12

Minimum L1 norm reconstruction — S14

Adding mean value — S15

Reconstructed data

**FIGURE 6**

Europäisches
Patentamt

European
Patent Office

Office européen
des brevets

# EUROPEAN SEARCH REPORT

Application Number

EP 07 30 1424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2004/046879 A (QUALCOMM INC [US])<br>3 June 2004 (2004-06-03)<br>* abstract; figures 2,4,5,7,8 *<br>* paragraphs [0005], [0026] - [0028],<br>[0034] - [0043] * | 1,8<br><br>2-7,9,10 | INV.<br>H04N7/26 |
| X | REIBMAN A ET AL: "Multiple description video using rate-distortion splitting" PROCEEDINGS 2001 INTERNATIONAL CONFERENCE ON IMAGE PROCESSING. ICIP 2001. THESSALONIKI, GREECE, OCT. 7 - 10, 2001; [INTERNATIONAL CONFERENCE ON IMAGE PROCESSING], NEW YORK, NY : IEEE, US, vol. 1, 7 October 2001 (2001-10-07), pages 978-981, XP010565025<br>ISBN: 978-0-7803-6725-8<br>* abstract *<br>* paragraphs [0001], [0002] * | 1,8 | |
| X | LIN S ET AL: "Multiple Description Coding for Video Delivery" PROCEEDINGS OF THE IEEE, IEEE. NEW YORK, US, vol. 93, no. 1, 1 January 2005 (2005-01-01), pages 57-70, XP011123853<br>ISSN: 0018-9219<br>* abstract *<br>* paragraphs [0001], [0003] * | 1,8 | TECHNICAL FIELDS SEARCHED (IPC)<br><br>H04N |

-/--

The present search report has been drawn up for all claims

| Place of search | Date of completion of the search | Examiner |
|---|---|---|
| Munich | 14 October 2008 | Cakiroglu Garton, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................................................

& : member of the same patent family, corresponding
document

EPO FORM 1503 03.82 (P04C01)

| | Europäisches Patentamt |
|---|---|
| | European Patent Office |
| | Office européen des brevets |

## EUROPEAN SEARCH REPORT

Application Number

EP 07 30 1424

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COMAS D ET AL: "Rate-distortion optimization in a robust video transmission based on unbalanced multiple description coding" MULTIMEDIA SIGNAL PROCESSING, 2001 IEEE FOURTH WORKSHOP ON OCTOBER 3-5, 2001, PISCATAWAY, NJ, USA,IEEE, 3 October 2001 (2001-10-03), pages 581-586, XP010565835 ISBN: 978-0-7803-7025-8 * abstract * * page 582, paragraphs 2,3 * ----- | 1,8 | |
| X | T. PETRISOR, B. PESCQUET-POPESCU, J. RESQUET: "A Compressed Sensing Approach to Frame-Based Multiple Description Coding" ICASSP 2007, 15 April 2007 (2007-04-15), - 20 April 2007 (2007-04-20) XP002499661 Retrieved from the Internet: URL:http://ieeexplore.ieee.org/stamp/stamp .jsp?arnumber=4217507&isnumber=4217319> | 1-8 | |
| | | | TECHNICAL FIELDS SEARCHED (IPC) |
| A | * the whole document * ----- | 2-7,9,10 | |
| X | US 2006/038705 A1 (BRADY DAVID J [US] ET AL) 23 February 2006 (2006-02-23) * abstract; claims 7,8; figures 6,7 * * paragraphs [0005] - [0008], [0053] - [0056], [0068] - [0081], [0092], [0106] - [0112], [0128], [0174], [0181], [0200] * ----- -/-- | 4,9 | |

The present search report has been drawn up for all claims

| Place of search | Date of completion of the search | Examiner |
|---|---|---|
| Munich | 14 October 2008 | Cakiroglu Garton, S |

EPO FORM 1503 03.82 (P04C01)

EP 2 046 046 A1

| | Europäisches Patentamt European Patent Office Office européen des brevets | **EUROPEAN SEARCH REPORT** | Application Number EP 07 30 1424 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | CANDÈS E J ET AL: "Robust uncertainty principles: exact signal reconstruction from highly incomplete frequency information" INTERNET CITATION, vol. 52, no. 2, February 2006 (2006-02), pages 489-509, XP002491493 [retrieved on 2006-02-01] * abstract * * paragraph [0001] * ----- | 4,6,9 | |
| X | WO 2006/122146 A (UNIV RICE WILLIAM M [US]; BARANIUK RICHARD G [US]; BARON DROR Z [US];) 16 November 2006 (2006-11-16) * abstract * * paragraphs [0060] - [0064], [0092], [0092], [0231] * ----- | 4,9 | |
| X | EMMANUEL CANDÈS, JUSTIN ROMBERG, AND TERENCE TAO: "Stable signal recovery from incomplete and inaccurate measurements" COOMUNICATIONS ON PURE AND APPLIED MATHEMATICS, August 2006 (2006-08), XP002499280 Retrieved from the Internet: URL:http://users.ece.gatech.edu/~justin/Publications_files/StableRecovery.pdf> * abstract * * paragraphs [01.1], [01.2], [0003] * ----- -/-- | 1-10 | **TECHNICAL FIELDS SEARCHED (IPC)** |

The present search report has been drawn up for all claims

| Place of search | Date of completion of the search | Examiner |
|---|---|---|
| Munich | 14 October 2008 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 07 30 1424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GALEN REEVES ET AL: "Differences Between Observation and Sampling Error in Sparse Signal Reconstruction" STATISTICAL SIGNAL PROCESSING, 2007. SSP '07. IEEE/SP 14TH WORKSH OP ON, IEEE, PI, 1 August 2007 (2007-08-01), pages 690-694, XP031134158 ISBN: 978-1-4244-1197-9 * abstract * * paragraphs [0001], [0003], [0004] * | 4,5,9 | |
| X | MALEH R ET AL: "Sparse Gradient Image Reconstruction Done Faster" IMAGE PROCESSING, 2007. ICIP 2007. IEEE INTERNATIONAL CONFERENCE ON, IEEE, PI, 1 September 2007 (2007-09-01), pages II-77, XP031157865 ISBN: 978-1-4244-1436-9 * abstract * * paragraphs [0001], [0003] - [0005] * | 4,6,9 | |
| A | EP 0 584 741 A (FUJI XEROX CO LTD [JP] FUJI XEROX CO LTD [CH]) 2 March 1994 (1994-03-02) * the whole document * | 3 | TECHNICAL FIELDS SEARCHED (IPC) |
| A | DE 199 44 301 A1 (SIEMENS AG [DE]) 5 April 2001 (2001-04-05) * the whole document * | 3 | |

The present search report has been drawn up for all claims

| Place of search | Date of completion of the search | Examiner |
|---|---|---|
| Munich | 14 October 2008 | Cakiroglu Garton, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 07 30 1424

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2008

| Patent document cited in search report | | Publication date | Patent family member(s) | | Publication date |
|---|---|---|---|---|---|
| WO 2004046879 | A | 03-06-2004 | AT | 402523 T | 15-08-2008 |
| | | | AU | 2003291057 A1 | 15-06-2004 |
| | | | AU | 2003291058 A1 | 15-06-2004 |
| | | | CA | 2506102 A1 | 03-06-2004 |
| | | | CN | 1726644 A | 25-01-2006 |
| | | | CN | 1742436 A | 01-03-2006 |
| | | | EP | 1579577 A2 | 28-09-2005 |
| | | | EP | 1573469 A2 | 14-09-2005 |
| | | | JP | 2006506912 T | 23-02-2006 |
| | | | JP | 2006506913 T | 23-02-2006 |
| | | | KR | 20050074622 A | 18-07-2005 |
| | | | KR | 20050072487 A | 11-07-2005 |
| | | | WO | 2004047425 A2 | 03-06-2004 |
| US 2006038705 | A1 | 23-02-2006 | US | 2008080773 A1 | 03-04-2008 |
| | | | US | 2008074663 A1 | 27-03-2008 |
| | | | US | 2008129568 A1 | 05-06-2008 |
| | | | US | 2008074291 A1 | 27-03-2008 |
| | | | US | 2008074292 A1 | 27-03-2008 |
| WO 2006122146 | A | 16-11-2006 | US | 2007027656 A1 | 01-02-2007 |
| EP 0584741 | A | 02-03-1994 | DE | 69324743 D1 | 10-06-1999 |
| | | | DE | 69324743 T2 | 09-09-1999 |
| | | | JP | 3196906 B2 | 06-08-2001 |
| | | | JP | 6070178 A | 11-03-1994 |
| DE 19944301 | A1 | 05-04-2001 | WO | 0120894 A2 | 22-03-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. CANDES ; J. ROMBERG ; T. TAO.** Robust uncertainty principles: Exact signal reconstruction from highly incomplete frequency information. *IEEE Trans. on Information Theory,* February 2006, vol. 52 (2